# EUROPEAN PATENT APPLICATION

(11) **EP 4 661 313 A1**
(43) Date of publication of application: **10.12.2025**
(21) Application number: 24769727.9
(22) Date of filing: 22.02.2024
(51) Int. Cl.: H04B 7/185, H04W 4/14

(54) **COMMUNICATION METHOD, DEVICE, AND SERVER**

(30) Priority: 15.03.2023 CN 202310287147
(71) Applicant: Huawei Technologies Co., Ltd., Shenzhen, Guangdong 518129 (CN)
(72) Inventor: LIU, Rui, Shenzhen, Guangdong 518129 (CN); WANG, Fangning, Shenzhen, Guangdong 518129 (CN); LI, Zhaoyang, Shenzhen, Guangdong 518129 (CN)
(74) Representative: Gill Jennings & Every LLP
(86) International application number: PCT/CN2024/078191
(87) International publication number: WO 2024/188032

(57) **Abstract**

This application provides a communication method, a device, and a server. In the method, before sending a satellite packet to a second electronic device, a first electronic device determines a text resource set supported by the second electronic device. The first electronic device sends a first packet to the second electronic device through a satellite in response to a first operation of a first user, where the first packet includes a code corresponding to at least one piece of text content corresponding to the first operation. According to this solution, the first packet sent by the first electronic device is a packet that can be decoded by the second electronic device, to ensure communication accuracy. In addition, the satellite packet transmitted between the electronic devices includes a code corresponding to text content. This can occupy fewer satellite communication resources to transmit more text content, thereby improving communication efficiency.

## Description

### CROSS-REFERENCE TO RELATED APPLICATIONS

This application claims priority to Chinese Patent Application No. 202310287147.2, filed with the China National Intellectual Property Administration on March 15, 2023 and entitled "COMMUNICATION METHOD, DEVICE, AND SERVER", which is incorporated herein by reference in its entirety.

### TECHNICAL FIELD

This application relates to the field of communication technologies, and in particular, to a communication method, a device, and a server.

### BACKGROUND

Satellite communication is communication in which a satellite serves as a network relay. With development of satellite communication technologies, more terminal devices also support satellite communication, to provide more choices for communication modes of users.

For example, packet communication based on a BeiDou navigation satellite system (BeiDou navigation satellite system, BDS) means that bidirectional information transmission can be performed between an electronic device, a BeiDou satellite, and a server via satellite signals. Generally, a short message is used as a basic transmission unit in BeiDou satellite communication, and BeiDou short message communication is a functional feature attached to the BDS.

BeiDou short message communication can provide communication services in areas (such as uninhabited areas, deserts, oceans, and polar regions) that cannot be covered by common mobile communication signals or in cases (such as earthquakes, floods, and typhoons) in which communication base stations are damaged. An electronic device on which a BeiDou short message module is installed may perform emergency communication by sending a BeiDou short message. A location of the electronic device can be positioned through BeiDou short message communication, so that a user knows the location of the user, and information can be sent to the outside through BeiDou short message communication. In this way, what happened can be told to another person. Therefore, BeiDou short message communication plays an important role in fields such as national defense, people's livelihood, and emergency rescue, and is also widely used in outdoors, fishery, disaster rescue, and other scenarios.

However, because air interface resources of the BeiDou short message are limited, and BeiDou short message communication has limitations on both a short message sending frequency and a short message content length, how to carry more valid content in a satellite short message becomes an important issue.

### SUMMARY

This application provides a communication method, a device, and a server, to increase an amount of information that can be transmitted through satellite communication.

According to a first aspect, an embodiment of this application provides a communication method. The method may be performed by a first electronic device. The method includes: The first electronic device determines a set identifier of a first text resource set, where the first text resource set is a text resource set supported by a second electronic device, and the first text resource set includes a plurality of pieces of text content and a code corresponding to each piece of text content; the first electronic device obtains the first text resource set based on the set identifier of the first text resource set; and the first electronic device sends a first packet to the second electronic device through a satellite in response to a first operation of a first user, where the first packet includes a code corresponding to at least one piece of text content corresponding to the first operation.

In the foregoing method, when sending a satellite packet to the second electronic device, the first electronic device may first determine a text resource set supported by the second electronic device, and then send the packet based on the text resource set supported by the second electronic device, so that the second electronic device can decode the packet. This ensures communication accuracy. In addition, the satellite packet transmitted between the electronic devices includes a code corresponding to text content. This can occupy fewer satellite communication resources to transmit more text content, thereby improving communication efficiency.

In a possible design, after obtaining the first text resource set based on the set identifier of the first text resource set, the method further includes: displaying the plurality of pieces of text content in the first text resource set, where the at least one piece of text content is text content selected from the plurality of pieces of text content.

According to this design, after obtaining the first text resource set, the first electronic device may display the plurality of pieces of text content in the first text resource set, so that a user can intuitively view text content that can be selected by the user, and select, from the text content, text content that the user wants to send. This improves user experience.

In a possible design, determining the set identifier of the first text resource set includes: sending a first message to a server, where the first message is used to query a set identifier of a text resource set supported by the second electronic device; and receiving a second message sent by the server, where the second message includes the set identifier of the first text resource set.

According to this design, the server may manage a set identifier of a text resource set supported by each electronic device, and the first electronic device may obtain, from the server, the set identifier of the text resource set supported by the second electronic device. This ensures satellite communication accuracy.

In a possible design, determining the identifier of the first text resource set includes: obtaining the set identifier of the first text resource set from a second packet, where the second packet is a packet that is received in a preset time period before a current time and whose sender is a user of the second electronic device.

According to this design, when the first electronic device receives the second packet of the user of the second electronic device in the preset time period before the current time, the first electronic device may obtain the set identifier of the first text resource set from the second packet, and does not need to query the server again. This further improves efficiency of satellite communication.

In a possible design, obtaining the first text resource set based on the set identifier of the first text resource set includes: searching local storage space for the first text resource set based on the set identifier of the first text resource set; and when the first text resource set exists in the local storage space, obtaining the first text resource set from the local storage space; or when the first text resource set does not exist in the local storage space, requesting to download the first text resource set from the server, receiving a download address of the first text resource set sent by the server, and downloading the first text resource set based on the download address of the first text resource set.

In a possible design, sending the first packet to the second electronic device through the satellite includes: sending the first packet to the server, so that the server forwards the first packet to the second electronic device through the satellite; or sending the first packet to the satellite, so that the satellite sends the first packet to the second electronic device.

According to this design, this application provides a plurality of manners in which the first electronic device sends the satellite packet. This improves flexibility of satellite communication.

In a possible design, the method further includes: receiving a third packet sent by the server, where the third packet includes at least one piece of text content and the set identifier of the first text resource set, and the at least one piece of text content is obtained by the server by decoding a packet sent by the second electronic device through the satellite; and displaying the at least one piece of text content.

According to this design, after decoding the packet sent by the satellite, the server may generate the third packet including the at least one piece of text content. After receiving the third packet, the first electronic device may directly display the at least one piece of text content. This reduces a calculation amount of the first electronic device.

In a possible design, the method further includes: receiving a fourth packet sent by the second electronic device through the satellite, where the fourth packet includes a code corresponding to at least one piece of text content and the identifier of the first text resource set; decoding the fourth packet based on the first text resource set to obtain the at least one piece of text content; and displaying the at least one piece of text content.

According to this design, the first electronic device may be an electronic device having a decoding function, and the first electronic device decodes the received satellite packet. This extends a capability of the electronic device.

In a possible design, the method further includes: performing the following steps based on a specified period: sending a third message to the server, where the third message is used to query whether an updated text resource set exists; receiving a fourth message sent by the server, where the fourth message includes a set identifier of the updated text resource set and a download address of the updated text resource set; determining, based on the set identifier of the updated text resource set, that the updated text resource set is not stored in the first electronic device, and downloading the updated text resource set based on the download address of the updated text resource set; and sending a fifth message to the server, where the fifth message includes a set identifier of a text resource set supported by the first electronic device.

According to this design, the first electronic device may query in real time whether the text resource set is updated, and obtain the updated text resource set. After downloading the updated text resource set, the first electronic device may report, to the server, the set identifier of the text resource set currently supported by the first electronic device, so that the server manages the text resource set supported by each electronic device.

In a possible design, the set identifier of the first text resource set is a version number of the first text resource set.

In a possible design, the first text resource set is preconfigured by a system, or the first text resource set is generated by the server based on text content customized by a user.

According to this design, the text resource set in this application may be preconfigured by the system, and the user can be supported in customizing text content that can be quickly used in a satellite communication process, to meet a requirement of the user for quick satellite communication in a specific scenario, and improve user experience.

According to a second aspect, an embodiment of this application provides a communication method. The method may be performed by a second electronic device. The method includes: The second electronic device generates a second packet based on at least one piece of text content corresponding to a second operation and a first text resource set in response to the second operation of a second user, where the first text resource set includes a plurality of pieces of text content and a code corresponding to each piece of text content; and the second electronic device sends the second packet to a first electronic device through a satellite, where the second packet includes a code corresponding to the at least one piece of text content and a set identifier of the first text resource set.

In the method, when sending a satellite packet, the second electronic device may directly generate the satellite packet based on a text resource set supported by the second electronic device, and include the set identifier of the first text resource set in the second packet. In this way, the first electronic device can obtain the first text resource set based on the set identifier of the first text resource set, and correctly decode the second packet. This design can provide a manner of quickly sending a satellite packet for an electronic device that is not connected to a general-purpose network, and can ensure accuracy of satellite communication.

In a possible design, the method further includes: receiving a first packet sent by the first electronic device through the satellite; decoding the first packet based on the first text resource set to obtain at least one piece of text content corresponding to the first packet; and performing display based on the at least one piece of text content corresponding to the first packet.

In a possible design, the method further includes: performing the following steps based on a specified period: sending a sixth message to a server, where the sixth message is used to query whether an updated text resource set exists; receiving a seventh message sent by the server, where the seventh message includes a set identifier of the updated text resource set and a download address of the updated text resource set; determining, based on the set identifier of the updated text resource set, that the updated text resource set is not stored in the second electronic device, and downloading the updated text resource set based on the download address of the updated text resource set; and sending an eighth message to the server, where the eighth message includes the set identifier of the text resource set supported by the second electronic device.

In a possible design, the set identifier of the first text resource set is a version number of the first text resource set.

In a possible design, the first text resource set is preconfigured by a system, or the first text resource set is generated by the server based on text content customized by a user.

According to a third aspect, an embodiment of this application provides a communication method. The method may be performed by a server. The method includes: The server receives, through a satellite, a second packet sent by the second electronic device, where the second packet includes a code corresponding to at least one piece of text content and a set identifier of a first text resource set, and the first text resource set includes a plurality of pieces of text content and a code corresponding to each piece of text content; the server obtains the first text resource set based on the set identifier of the first text resource set, and decodes the second packet based on the first text resource set, to obtain the at least one piece of text content; the server generates a third packet, where the third packet includes the at least one piece of text content, the third packet further includes the set identifier of the first text resource set or a set identifier of a second text resource set, and the second text resource set is a text resource set supported by the second electronic device; and the server sends the third message to the first electronic device.

In the method, the server may decode the received second packet, to reduce a calculation amount of the first electronic device. In addition, the server may further add the set identifier of the first text resource set or the set identifier of the second text resource set to the third packet, to flexibly indicate a text resource set used when the first electronic device replies to the second electronic device.

In a possible design, when it is determined that the first electronic device does not have a decoding function, steps of obtaining the first text resource set based on the set identifier of the first text resource set, and decoding the second packet based on the first text resource set are performed.

According to this design, when determining that the first electronic device does not have the decoding function, the server may perform a decoding step, to avoid a problem that communication fails because the first electronic device cannot decode a packet.

In a possible design, the method further includes: when it is determined that the first electronic device has the decoding function, forwarding the second packet to the first electronic device.

In a possible design, the method further includes: adding the set identifier of the second text resource set to the third packet when it is determined that the second packet is a satellite packet.

According to this design, the server may indicate the first electronic device to perform encoding based on the second text resource set when replying to the second electronic device. Therefore, when it is ensured that the electronic devices can normally communicate with each other, the two electronic devices can perform encoding based on different text resource sets. This is more flexible and meets a user requirement.

In a possible design, adding the set identifier of the second text resource set to the third packet when it is determined that the second packet is the satellite packet includes: adding the set identifier of the second text resource set to the third packet when it is determined that the second packet is the satellite packet and the second electronic device has a function of receiving the satellite packet.

According to this design, when the second electronic device has the function of receiving the satellite packet, it indicates that the first electronic device may reply to the second electronic device with a packet. In this case, the server may indicate a text resource set used when the first electronic device replies, to prevent the server from adding a set identifier of the text resource set to the third packet. However, resources are wasted when the first electronic device cannot reply to a message.

In a possible design, the set identifier of the first text resource set is a version number of the first text resource set.

In a possible design, the first text resource set is a quick help text resource set, and the second text resource set is a quick reply text resource set.

According to a fourth aspect, this application provides a communication method. The method may be performed by a first electronic device. The method includes: The first electronic device sends a first packet to a server, and the server sends the first packet to a second electronic device through a satellite.

In the method, after the electronic device sends the packet to the server, the server sends the packet to the satellite. In this case, according to the communication method provided in this embodiment of this application, an electronic device on which no satellite communication module is installed is supported in sending a satellite message. This expands an application scope of satellite communication and enhances a communication capability of the electronic device.

According to a fifth aspect, this application provides an electronic device. The electronic device includes a plurality of functional modules. The plurality of functional modules interact with each other to implement the method performed by the electronic device in the first aspect and the implementations of the first aspect, the second aspect and the implementations of the second aspect, or the fourth aspect and the implementations of the fourth aspect. The plurality of functional modules may be implemented based on software, hardware, or a combination of software and hardware, and the plurality of functional modules may be randomly combined or divided based on specific implementation.

According to a sixth aspect, this application provides an electronic device, including at least one processor and at least one memory. The at least one memory stores computer program instructions. When the electronic device runs, the at least one processor performs the method performed by the electronic device in the first aspect and the implementations of the first aspect, the second aspect and the implementations of the second aspect, or the fourth aspect and the implementations of the fourth aspect.

According to a seventh aspect, this application provides a server. The server includes a plurality of functional modules, and the plurality of functional modules interact with each other to implement the method performed by the server in the third aspect and the implementations of the third aspect. The plurality of functional modules may be implemented based on software, hardware, or a combination of software and hardware, and the plurality of functional modules may be randomly combined or divided based on specific implementation.

According to an eighth aspect, this application provides a server, including at least one processor and at least one memory. The at least one memory stores computer program instructions. When the server runs, the at least one processor performs the method performed by the server in the third aspect and the implementations of the third aspect.

According to a ninth aspect, this application provides a satellite communication system. The packet communication system includes an electronic device and a server. The electronic device is configured to perform the method according to the first aspect or the second aspect and the implementations of the first aspect or the second aspect, and the server is configured to perform the method according to the third aspect and the implementations of the third aspect.

According to a tenth aspect, this application further provides a computer program product including instructions. When the computer program product runs on a computer, the computer is enabled to perform the method performed by the electronic device or the server in any one of the foregoing aspects and the implementations of any one of the foregoing aspects.

According to an eleventh aspect, this application further provides a computer-readable storage medium. The computer-readable storage medium stores a computer program. When the computer program is executed by a computer, the computer is enabled to perform the method performed by the electronic device or the server in any one of the foregoing aspects and the implementations of any one of the foregoing aspects.

According to a twelfth aspect, this application further provides a chip. The chip is configured to read a computer program stored in a memory, to perform the method performed by the electronic device or the server in any one of the foregoing aspects and the implementations of any one of the foregoing aspects.

According to a thirteenth aspect, this application further provides a chip system. The chip system includes a processor, configured to support a computer apparatus in implementing the method performed by the electronic device or the server in any one of the foregoing aspects and the implementations of any one of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of an architecture of a satellite communication system according to an embodiment of this application;
FIG. 2 is a diagram of a structure of an electronic device according to an embodiment of this application;
FIG. 3 is a block diagram of a software structure of an electronic device according to an embodiment of this application;
FIG. 4A and FIG. 4B are a flowchart of a communication method according to an embodiment of this application;
FIG. 5 shows a text content editing interface according to an embodiment of this application;
FIG. 6 is a diagram of an information editing interface according to an embodiment of this application;
FIG. 7 is a diagram of an information editing interface according to an embodiment of this application;
FIG. 8 is a diagram of an information interface according to an embodiment of this application;
FIG. 9 is a flowchart of a communication method according to an embodiment of this application;
FIG. 10A and FIG. 10B are a flowchart of a communication method according to an embodiment of this application;
FIG. 11A and FIG. 11B are a flowchart of a communication method according to an embodiment of this application;
FIG. 12 is a diagram of an information editing interface of a second electronic device according to an embodiment of this application;
FIG. 13 shows an information interface of a first electronic device according to an embodiment of this application;
FIG. 14 is a flowchart of a communication method according to an embodiment of this application; and
FIG. 15 is a flowchart of a communication method according to an embodiment of this application.

### DESCRIPTION OF EMBODIMENTS

To make objectives, technical solutions, and advantages of embodiments of this application clearer, the following further describes embodiments of this application in detail with reference to accompanying drawings. The terms "first" and "second" below in the description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may indicate: a, b, c, a and b, a and c, b and c, or a, b and c, where a, b, and c may be singular or plural.

First, BeiDou short message communication is described. A BeiDou navigation satellite system (BeiDou navigation satellite system, BDS) is a global satellite navigation system that is being independently developed and independently operated in China. BDS-based short message communication means that bidirectional information transmission can be performed between an electronic device, a BeiDou satellite, and a server via a satellite signal. Generally, a short message is used as a basic transmission unit in BeiDou satellite communication, and BeiDou short message communication is a functional feature attached to the BDS. BeiDou short message communication can provide communication services in areas (such as uninhabited areas, deserts, oceans, and polar regions) that cannot be covered by common mobile communication signals or in cases (such as earthquakes, floods, and typhoons) in which communication base stations are damaged.

Optionally, an electronic device may perform emergency communication by sending a short message to the BeiDou satellite. A location of the electronic device can be positioned through BeiDou short message communication, so that a user knows the location of the user, and information can be sent to the outside through BeiDou short message communication. In this way, what happened can be told to another person. Therefore, BeiDou short message communication plays an important role in fields such as national defense, people's livelihood, and emergency rescue, and is also widely used in outdoors, fishery, disaster rescue, and other scenarios.

However, because air interface resources of a BeiDou short message are limited, and BeiDou short message communication has limitations on both a short message sending frequency and a short message content length, how to carry more valid content in a satellite short message becomes an important issue.

Based on the foregoing problem, embodiments of this application provide a communication method, a device, and a server. For ease of description, the following describes a packet communication method provided in embodiments of this application by using an example in which the communication method provided in embodiments of this application is applied to satellite short message communication. It may be understood that, in satellite short message communication, an electronic device may send a short message to a server or an electronic device through a satellite. When embodiments of this application are applied to another communication scenario, the electronic device may send data to the server or the electronic device through another relay communication device, or the electronic device may directly send data to the server. This is not limited in embodiments of this application.

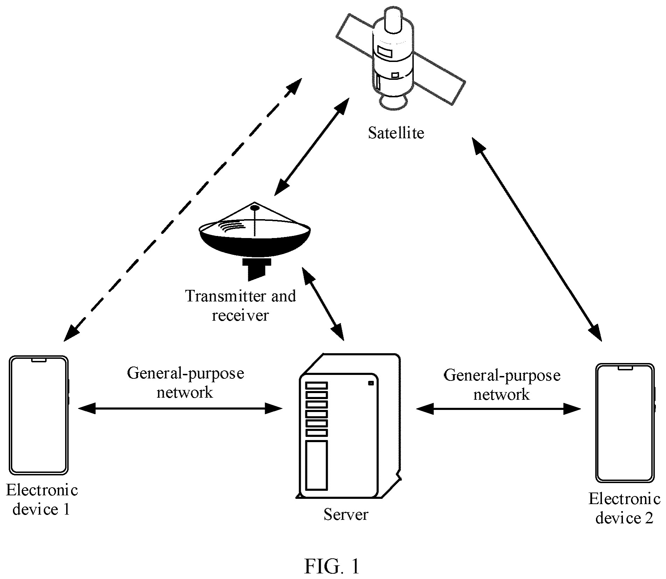

FIG. 1 is a diagram of an architecture of a satellite communication system according to an embodiment of this application. Refer to FIG. 1. The satellite communication system provided in this embodiment of this application includes an electronic device, a server, and a satellite. Further, the satellite communication system may further include a transmitter and a receiver. The server may be a cloud server provided by an electronic device vendor, or may be a BeiDou server. The server may be configured to forward and process information received and sent by the satellite, and the server may be implemented by one or more computing devices. The transmitter and the receiver are configured to assist the server in sending or receiving a satellite short message. Power of the transmitter and power of the receiver are high, so that efficiency of satellite communication can be improved.

FIG. 1 shows two electronic devices (an electronic device 1 and an electronic device 2) as examples. In this embodiment of this application, when a communication network is available, the electronic device may communicate with the server or another electronic device via the general-purpose network. When a general-purpose network is unavailable, the electronic device may communicate with the server or another electronic device through the satellite.

Optionally, in this embodiment of this application, a satellite communication module may be installed in the electronic device, and the electronic device may directly send a short message to the satellite. Alternatively, when no satellite communication module is installed in the electronic device, the electronic device may send a satellite short message through the server.

For example, the satellite communication system shown in FIG. 1 may be a BeiDou short message communication system, the satellite may be a BeiDou satellite, and the satellite communication module installed in the electronic device may be a BDS module. It may be understood that the BeiDou satellite is merely used as an example instead of a limitation. In specific implementation, the communication method provided in embodiments of this application may be further applied to other satellite short message communication. This is not limited in this application.

In the communication method provided in embodiments of this application, a first electronic device determines a set identifier of a first text resource set, where the first text resource set is a text resource set supported by a second electronic device, and the first text resource set includes a plurality of pieces of text content and a code corresponding to each piece of text content; the first electronic device obtains the first text resource set based on the set identifier of the first text resource set; and the first electronic device sends a first packet to the second electronic device through a satellite in response to a first operation of a first user, where the first packet includes a code corresponding to at least one piece of text content corresponding to the first operation.

According to the communication method provided in embodiments of this application, when sending a satellite packet to the second electronic device, the first electronic device may first determine a text resource set supported by the second electronic device, and then send the packet based on the text resource set supported by the second electronic device, so that the second electronic device can decode the packet. This ensures communication accuracy. In addition, the satellite packet transmitted between the electronic devices includes a code corresponding to text content. This can occupy fewer satellite communication resources to transmit more text content, thereby improving communication efficiency.

The following describes the electronic device, and embodiments for using such an electronic device. The electronic device in embodiments of this application may be a tablet computer, a mobile phone, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

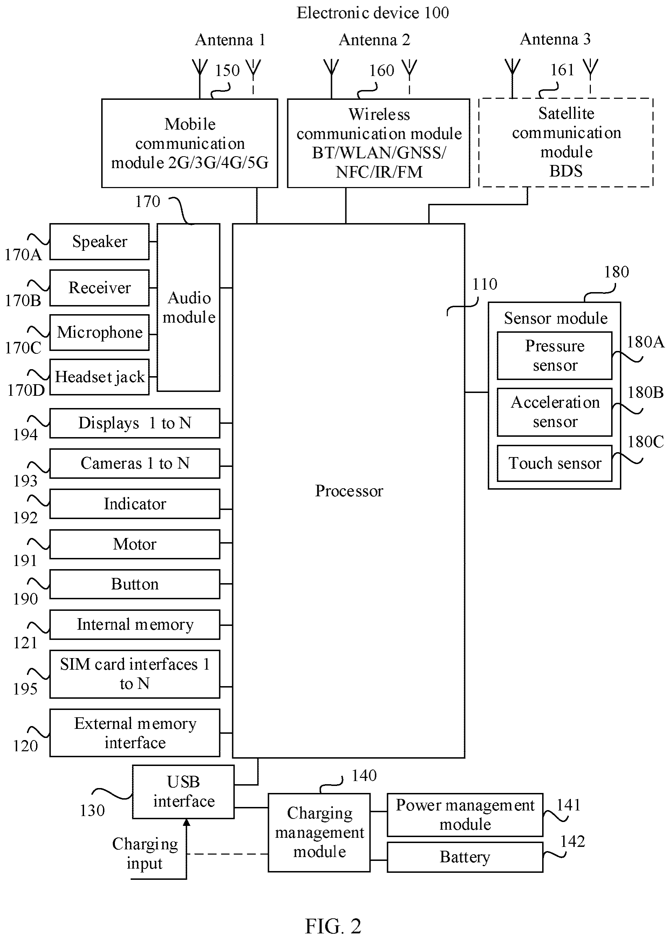

FIG. 2 is a diagram of a structure of an electronic device 100 according to an embodiment of this application. As shown in FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. Optionally, the electronic device may further include a satellite communication module 161.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instructions operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input of the battery 142 and/or an input of the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes the wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module 161 may provide a satellite short message communication capability for the electronic device 100. The electronic device 100 may send a short message to a satellite through the satellite communication module 161, and receive a short message sent by the satellite to the electronic device, to implement communication between the electronic device 100 and the satellite. For example, the satellite communication module 161 may be a BDS module.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, and may further include a nonvolatile memory, for example, at least one magnetic disk storage device, a flash memory, or a universal flash storage (universal flash storage, UFS).

The external memory interface 120 may be configured to connect to an external memory card, for example, a micro SD card, to extend a storage capability of the electronic device. The external memory card communicates with the processor 110 through the external memory interface 120, to implement a data storage function. For example, files such as pictures or videos are stored in the external memory card.

The electronic device 100 may implement an audio function, for example, music playing and recording, through the audio module 170, the speaker 170A, the receiver 170B, the microphone 170C, the headset jack 170D, the application processor.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180C may alternatively be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The touch vibration feedback effect may alternatively be customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 2 do not constitute a specific limitation on the electronic device 100. The electronic device may further include more or fewer components than those shown in the figure, or some components may be combined, or some components may be split, or there may be a different component arrangement. In addition, a combination/connection relationship between the components in FIG. 2 may alternatively be adjusted and modified.

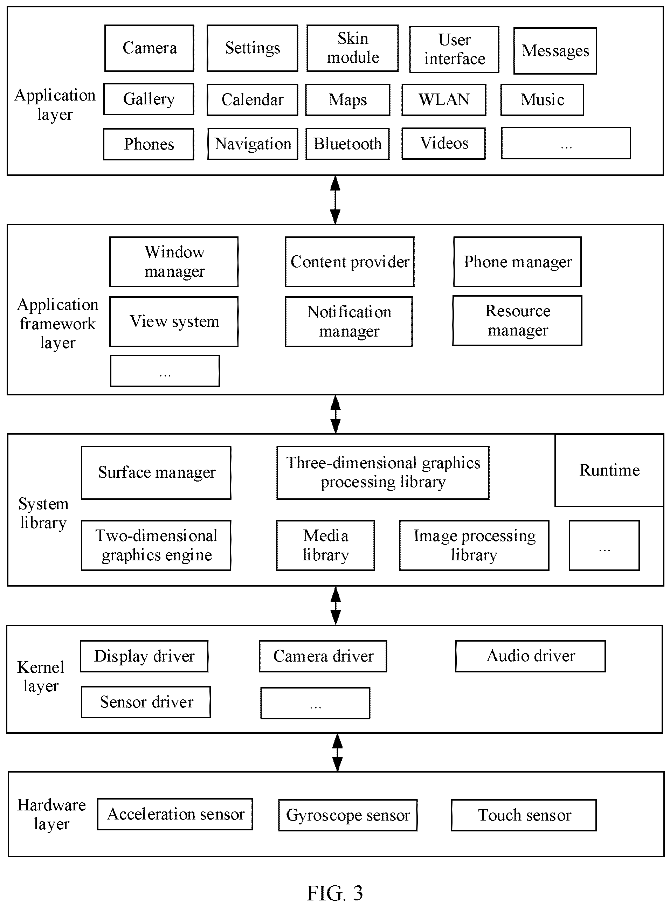

FIG. 3 is a block diagram of a software structure of an electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 3, the application layer may include Camera, Settings, a skin module, a user interface (user interface, UI), a third-party application, and the like. The third-party application may include Gallery, Calendar, Phones, Maps, Navigation, WLAN, Bluetooth, Music, Videos, Messages, and the like. In this embodiment of this application, the application layer may include a target installation package that is of a target application and that the electronic device requests to download from a server, and a function file and a layout file in the target installation package are adapted to the electronic device.

The application framework layer provides an application programming interface (application programming interface, API) and a programming framework for an application at the application layer. The application framework layer may include some predefined functions. As shown in FIG. 3, the application framework layer may include a window manager, a content provider, a view system, a phone manager, a resource manager, and a notification manager.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on the background, or may be a notification that appears on a screen in a form of a dialog window. For example, text information is prompted in the status bar, an alert tone is made, the electronic device vibrates, or an indicator light blinks.

A runtime includes a core library and a virtual machine. The runtime schedules and manages an operating system.

The core library includes two parts: a function that needs to be invoked in Java language, and a core library of the operating system. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and the software. The kernel layer includes at least a display driver, a camera driver, an audio driver, and a sensor driver.

A hardware layer may include various sensors, such as an acceleration sensor, a gyroscope sensor, and a touch sensor.

It should be noted that the structures shown in FIG. 2 and FIG. 3 are merely examples of the electronic device provided in embodiments of this application, and cannot impose any limitation on the electronic device provided in embodiments of this application. In specific implementation, the electronic device may have more or fewer components or modules than those in the structure shown in FIG. 2 or FIG. 3.

The following describes the communication method provided in embodiments of this application.

First, a text resource set provided in embodiments of this application is described. The text resource set provided in embodiments of this application includes a plurality of pieces of text content and a code corresponding to each piece of text content. The text resource set may also be referred to as a dictionary, a quick reply set, or the like.

For example, Table 1 is an example of the text resource set provided in embodiments of this application.

**Table 1 Text resource set**

| Text content | Binary code |
|---|---|
| Request for help | 00000001 |
| I am slightly injured | 00000010 |
| Roger that, help is on the way | 00000011 |
| Please report the location | 00000100 |

Refer to Table 1. The text resource set stored in the server may include a plurality of types of text content, the text content may be a word, a phrase, or a sentence, and each piece of text content corresponds to one code. The server may store a plurality of text resource sets. The text resource set in the server may be preconfigured by a system, or may be customized by a user. The electronic device may request, from the server, to download a text resource set preconfigured by the system and another text resource set customized by the user.

Each text resource set stored in the server corresponds to one set identifier. For example, the set identifier may be a version number. A developer may update the text resource set configured by the system, for example, add more text content, or delete or modify original text content. A set identifier of an updated text resource set also changes. For example, the set identifier is a version number. The version number of the original text resource set is v1, and the version number of the updated text resource set is v2. Similarly, the text resource set customized by the user may also be updated by the user corresponding to the electronic device that uploads the text resource set. Details are not described herein again.

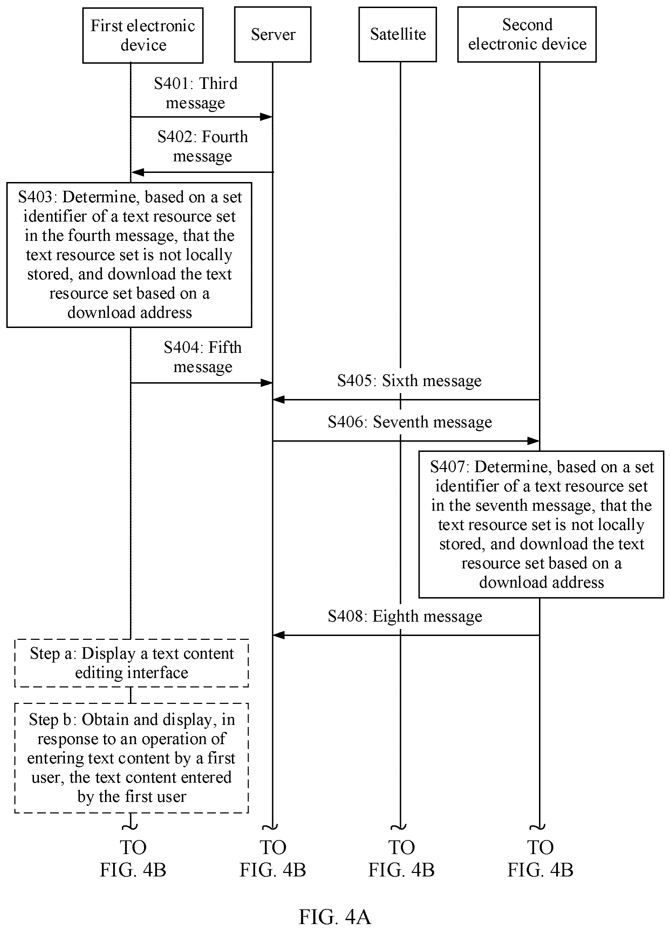

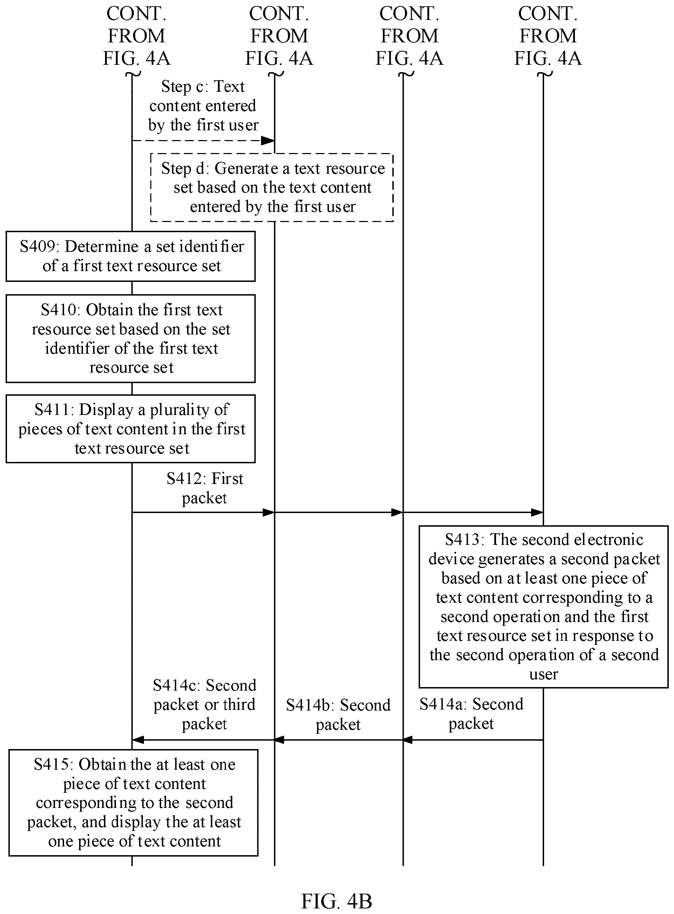

The following further describes the communication method provided in embodiments of this application. FIG. 4A and FIG. 4B are a flowchart of a communication method according to an embodiment of this application. The method may be performed by the electronic device, the server, and the satellite in the communication system shown in FIG. 1. Refer to FIG. 4A and FIG. 4B. The method includes the following steps.

S401: A first electronic device sends a third message to the server.

The third message is used to query whether a text resource set is updated.

S402: The server sends a fourth message to the first electronic device.

In an optional implementation, the fourth message may include a set identifier of the text resource set and a download address of the text resource set.

Optionally, the text resource set indicated by the fourth message may be an updated text resource set stored in the server, for example, a text resource set of a latest version stored in the server.

S403: The first electronic device determines, based on the set identifier of the text resource set in the fourth message, that the text resource set is not locally stored, and the first electronic device downloads the text resource set based on the download address.

In this embodiment of this application, after receiving the fourth message, the first electronic device may determine, based on the set identifier of the text resource set in the fourth message, whether the first electronic device locally stores the text resource set indicated by the fourth message. When the first electronic device determines that the text resource set is not locally stored, a text resource set stored in the server is updated, and the first electronic device may download the updated text resource set.

S404: The first electronic device sends the fifth message to the server.

Optionally, the fifth message is used to report, to the server, a set identifier of a text resource set supported by the first electronic device. The text resource set supported by the first electronic device may be a set identifier of a text resource set stored in the first electronic device.

In an optional implementation, the first electronic device may perform S401 to S404 based on a specified period, to query in real time whether the text resource set is updated, and obtain the updated text resource set. In addition, after downloading the updated text resource set, the first electronic device may report, to the server, a set identifier of a text resource set currently supported by the first electronic device, so that the server manages a text resource set supported by each electronic device.

It should be noted that, when S401 to S403 are performed, the first electronic device may be in a state of being connected to a general-purpose network. The general-purpose network may be, for example, a wireless local area network or a mobile communication network.

S405: A second electronic device sends a sixth message to the server.

Optionally, the sixth message may be used to query whether a text resource set is updated.

S406: The server sends a seventh message to the second electronic device.

Optionally, the seventh message may include a set identifier of the text resource set and a download address of the text resource set.

S407: The second electronic device determines, based on the set identifier of the text resource set in the seventh message, that the text resource set is not locally stored, and the second electronic device downloads the text resource set based on the download address.

S408: The second electronic device sends an eighth message to the server.

Optionally, the eighth message is used to report, to the server, a set identifier of a text resource set supported by the second electronic device.

It should be noted that, when S405 to S408 are performed, the second electronic device may be in a state of being connected to the general-purpose network. The general-purpose network may be, for example, the wireless local area network or the mobile communication network.

In specific implementation, for S405 to S408, refer to S401 to S404 for implementation. Repeated parts are not described again. A sequence of performing S401 to S404 and S405 to S408 is not limited in embodiments of this application. In specific implementation, S401 to S404 may be performed earlier than S405 to S408, or S405 to S408 may be performed earlier than S401 to S404, or S401 to S404 and S405 to S408 may be simultaneously performed.

In an implementation of this application, when the text resource set is a text resource set customized by a user, for example, the first electronic device reports text content customized by the user to the server, the communication method provided in this embodiment of this application may include the following steps.

Step a: The first electronic device displays a customized text content editing interface.

Step b: The first electronic device obtains and displays, in response to an operation of entering text content by a first user, the text content entered by the first user.

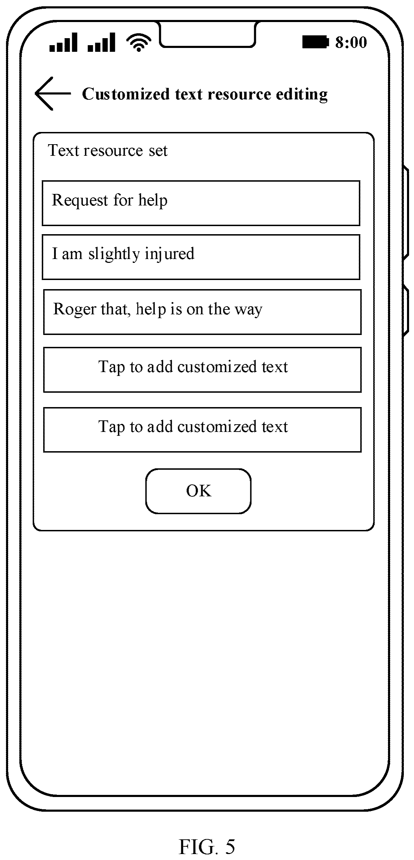

For example, FIG. 5 shows a customized text content editing interface according to an embodiment of this application. Refer to FIG. 5. The first user may enter the text content customized by the user in the customized text content editing interface, so that the first user can set common text content based on a communication requirement.

Step c: The first electronic device sends, to the server in response to a determining operation of the first user, the text content entered by the first user.

For example, determining the operation of the first user may be that the first user taps an "OK" control in the text content editing interface shown in FIG. 5.

Step d: The server generates a text resource set based on the text content entered by the first user.

In an optional implementation, the server may generate, for each piece of text content, a code corresponding to the text content, to generate a text resource set including a plurality of pieces of text content and the code corresponding to each piece of text content. In an optional implementation, the server may further generate a set identifier for the text resource set. For example, the set identifier may be a version number. The server may store the text resource set and the set identifier corresponding to the text resource set.

It should be noted that, after the server generates the text resource set based on the text content entered by the user, the first electronic device may modify the text content in the customized text resource editing interface based on the operation of the first user, and send modified text content to the server. The server regenerates a text resource set based on the modified text content. An electronic device other than the first electronic device may also request to download the text resource set from the server.

Base on the foregoing steps, the communication method provided in this embodiment of this application supports the user in customizing text content that can be quickly used in a satellite communication process, to meet a requirement of the user for quick satellite communication in a specific scenario, and improve user experience.

In the following steps, the first electronic device is an electronic device that can be connected to the general-purpose network, and the second electronic device is a device that cannot be connected to the general-purpose network.

S409: The first electronic device determines a set identifier of a first text resource set.

The first text resource set is the text resource set supported by the second electronic device, and the first text resource set includes a plurality of pieces of text content and a code corresponding to each piece of text content.

In this embodiment of this application, when the first electronic device wants to send a satellite packet to the second electronic device, the first electronic device needs to first determine the text resource set supported by the second electronic device, to ensure that the satellite packet sent by the first electronic device can be decoded by the second electronic device.

In an optional implementation, the first electronic device may send a first message to the server, where the first message may be used to query the set identifier of the text resource set supported by the second electronic device, and the first message may include a device identifier of the second electronic device. It can be learned from the foregoing descriptions of the text resource set that each time after downloading a text resource set, the electronic device reports, to the server, a set identifier of a text resource set supported by the electronic device. Therefore, the server may manage the set identifier of the text resource set supported by each electronic device. After receiving the first message, the server may search, based on the device identifier in the first message, for the set identifier of the text resource set supported by the second electronic device, and send a second message to the first electronic device. The second message may include the set identifier of the first text resource set.

In another optional implementation, the first electronic device has received, in a preset time period before a current time, a second packet whose sender is a user of the second electronic device, where the second packet includes the set identifier of the first text resource set. In this case, the first electronic device may obtain the set identifier of the first text resource set from the second packet. It should be noted that, in this implementation, the second packet may be a packet sent by the second electronic device through the satellite, or may be a packet generated by the server based on a packet sent by the second electronic device through the satellite.

S410: The first electronic device obtains the first text resource set based on the set identifier of the first text resource set.

In an optional implementation, after obtaining the set identifier of the first text resource set, the first electronic device may search local storage space for the first text resource set based on the set identifier of the first text resource set. When the first text resource set exists in the local storage space, the first electronic device obtains the first text resource set from the local storage space; or when the first text resource set does not exist in the local storage space, the first electronic device requests to download the first text resource set from the server. In specific implementation, the first electronic device may send, to the server, a message used to request to download the first text resource set, and receive a download address that is of the first text resource set and that is sent by the server. The first electronic device may download the first text resource set based on the download address of the first text resource set.

S411: The first electronic device displays the plurality of pieces of text content in the first text resource set.

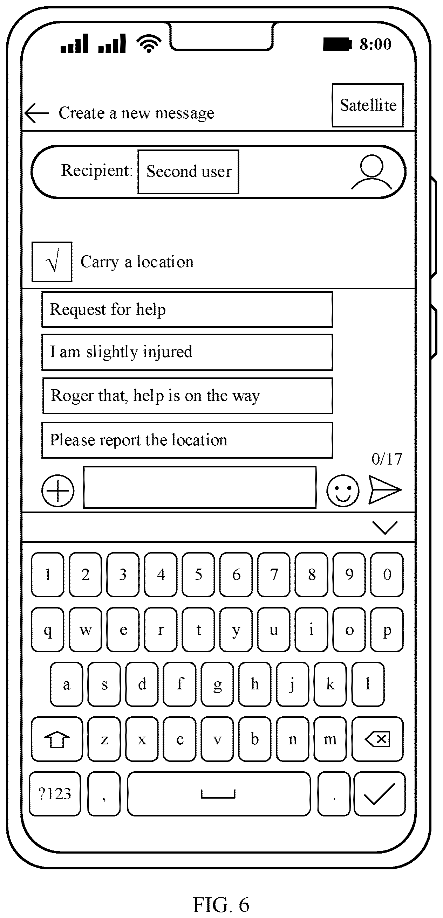

For example, FIG. 6 is a diagram of an information editing interface according to an embodiment of this application. Refer to FIG. 6. The first electronic device may display the plurality of pieces of text content in the first text resource set in the information editing interface. The first user may quickly select first text content from the plurality of pieces of text content displayed in the information editing interface.

S412: The first electronic device sends a first packet to the second electronic device through the satellite in response to a first operation of the first user, where the first packet includes a code corresponding to at least one piece of text content corresponding to the first operation.

Optionally, the first operation may be an operation that is triggered by the first user and that is of selecting text content and sending the text content. For example, in the information editing interface shown in FIG. 6, after the first user taps text content "please report the location", sending of a satellite packet of "please report the location" is triggered. Alternatively, the first operation is a sending operation triggered by the first user. For example, in the information editing interface shown in FIG. 6, the first user first selects at least one piece of text content from a plurality of pieces of text content, and then triggers the first operation.

In this embodiment of this application, the at least one piece of text content corresponding to the first operation is text content triggered by the first user for sending. The second electronic device may determine, based on the at least one piece of text content corresponding to the first operation and the first text resource set, the code corresponding to the at least one piece of text content, and generate the first packet based on the code corresponding to the at least one piece of text content. The text resource set shown in Table 1 is used as an example. Information carried in the first packet may be the code corresponding to the at least one piece of text content, and text content corresponding to the first operation is "please report the location". In this case, the information carried in the first packet may be "00000100".

In an optional implementation, the first electronic device may send the first packet to the server, the server sends the first packet to the satellite, and the satellite sends the first packet to the first electronic device; or the first electronic device may send the first packet to the satellite, and the satellite sends the first packet to the second electronic device.

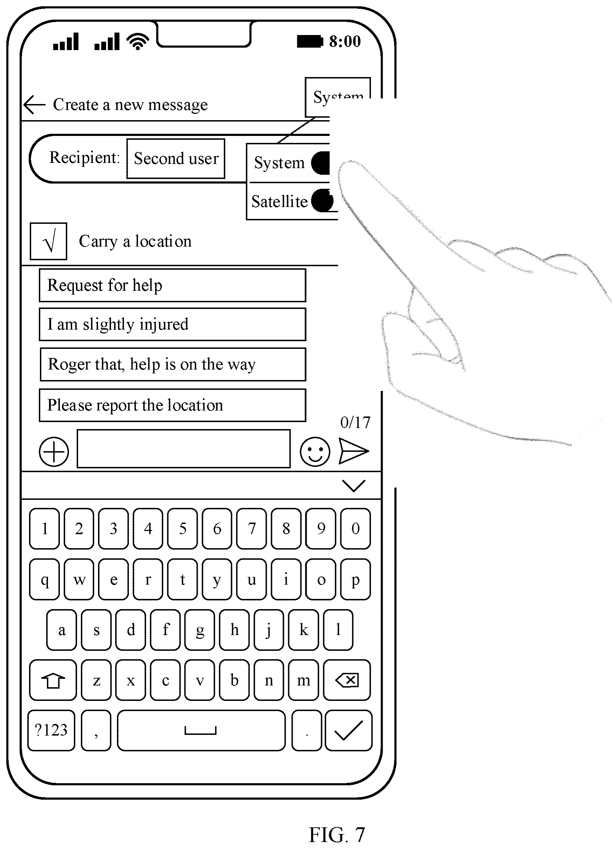

For example, the first user may select an information sending manner in the information editing interface. The information sending manner may include, for example, sending via the general-purpose network and sending via a satellite network. For example, FIG. 7 is a diagram of an information editing interface according to an embodiment of this application. Refer to FIG. 7. The first user may select the information sending manner. A "system" manner means that the first electronic device may send the second packet to the server via the general-purpose network, the server sends the second packet to the satellite, and then the satellite sends the second packet to the second electronic device. A "satellite" manner means that the first electronic device may directly send the second packet to the satellite, and the satellite sends the second packet to the second electronic device.

It may be understood that, in this embodiment of this application, after the electronic device sends a packet to the server, the server sends the packet to the satellite. In this case, the communication method provided in this embodiment of this application supports an electronic device on which no satellite communication module is installed in sending a satellite message. This expands an application scope of satellite communication and enhances a communication capability of the electronic device.

Optionally, the first packet may further include the set identifier of the first text resource set. After the second electronic device receives the first packet, if the second electronic device stores a plurality of text resource sets, the second electronic device may quickly determine, based on the set identifier of the first text resource set in the first packet, the first text resource set required for decoding the first packet. This further improves communication efficiency.

S413: The second electronic device generates the second packet based on at least one piece of text content corresponding to a second operation and the first text resource set in response to the second operation of a second user.

Optionally, the second operation may be an operation that is triggered by the second user and that is of selecting text content and sending the text content. For example, in the information editing interface shown in FIG. 6, after the second user taps text content "request for help", sending of a satellite packet of "request for help" is triggered. Alternatively, the second operation is a sending operation triggered by the second user. For example, in the information editing interface shown in FIG. 6, the second user first selects at least one piece of text content from a plurality of pieces of text content, and then triggers the second operation.

The second electronic device may determine, based on the at least one piece of text content selected by the second user and the first text resource set, a code corresponding to the at least one piece of text content, and generate the second packet based on the code corresponding to the at least one piece of text content. The text resource set shown in Table 1 is used as an example. The information carried in the first packet may be the code corresponding to the at least one piece of text content. In this case, the information carried in the first packet may be "00000001".

In this embodiment of this application, the second packet further includes the set identifier of the first text resource set. The second electronic device is in a state in which the second electronic device cannot be connected to the general-purpose network. Therefore, when sending a satellite packet, the second electronic device does not need to determine a text resource set supported by a receive electronic device, but directly generates the satellite packet based on the text resource set supported by the second electronic device, and includes the set identifier of the first text resource set in the second packet. In this way, the receive electronic device can obtain the first text resource set based on the set identifier of the first text resource set, so that the receive electronic device can correctly decode the second packet. This design can provide a manner of quickly sending a satellite packet for an electronic device that is not connected to the general-purpose network, and can ensure accuracy of satellite communication.

S414: The second electronic device sends the second packet to the first electronic device through the satellite.

In an implementation of this application, S414 may include the following steps.

S414a: The second electronic device sends the second packet to the satellite.

S414b: The satellite sends the second packet to the server.

S414c: The server forwards the second packet to the first electronic device; or the server generates a third packet based on the second packet, and sends the third packet to the first electronic device.

In this embodiment of this application, after decoding the second packet, the server may send the at least one piece of text content corresponding to the code in the second packet to the first electronic device. Alternatively, the server may directly send the second packet to the first electronic device, and the first electronic device performs decoding processing.

In an optional implementation, the server may determine, based on attribute information of the first electronic device, whether the first electronic device has a decoding function. If the first electronic device has the decoding function, the server forwards the second packet to the first electronic device. If the first electronic device does not have the decoding function, the server may decode the second packet based on the first text resource set. For example, the server may search the first text resource set for the at least one piece of text content corresponding to the code in the second packet, and the server may generate the third packet including the at least one piece of text content, and sends the third packet to the first electronic device. The third packet may be generated by modifying the second packet, for example, replacing the code in the second packet with the at least one piece of text content.

In an implementation (which is subsequently referred to as an implementation A), the first text resource set may be used to encode text content (for example, the text content of the second packet) sent by the second electronic device to the first electronic device, or may be used to encode text content sent by the first electronic device to the second electronic device. For example, the first text resource set includes a correspondence between a quick help word and a code, and a correspondence between a quick reply phrase and a code.

In another implementation (which is subsequently referred to as an implementation B), the first text resource set is used to encode text content sent by the second electronic device to the first electronic device, and another text resource set (which is subsequently referred to as a second text resource set) supported by the second electronic device is used to encode text content sent by the first electronic device to the second electronic device. For example, the first text resource set is a quick help text resource set, and includes a correspondence between a quick help word and a code, and the second text resource set is a quick reply text resource set, and includes a correspondence between a quick reply phrase and a code.

Based on the implementation A, the server may retain, in the sent second packet or the sent third packet, the set identifier of the first text resource set in the second packet received from the second electronic device.

Based on the implementation B, in some implementations of this application, when determining that the second packet is a satellite packet, the server may add a set identifier of the second text resource set to the second packet or the third packet.

In a further implementation, when determining that the second packet is the satellite packet and the second electronic device has a function of receiving the satellite packet, the server may add the set identifier of the second text resource set to the second packet or the third packet.

It may be understood that, in this design, if the third packet received by the first electronic device from the server is plaintext content, the first electronic device does not need to perform decoding processing.

After receiving the second packet or the third packet, the first electronic device may need to return a satellite packet to the second electronic device. In this case, the first electronic device needs to learn of the set identifier of the text resource set supported by the second electronic device.

Based on the foregoing implementation A, the first electronic device may learn of the set identifier that is of the first text resource set and that is provided by the second electronic device. Based on the foregoing implementation B, the first electronic device may learn of the set identifier that is of the second text resource set and that is added by the server to the second packet or the third packet.

S415: The first electronic device obtains the at least one piece of text content corresponding to the second packet, and displays the at least one piece of text content.

It can be learned from S414 that, in an optional implementation, the first electronic device may obtain the set identifier of the first text resource set from the second packet or the third packet, and obtain the first text resource set based on the set identifier of the first text resource set. The first electronic device may decode the second packet based on the first text resource set, to obtain the at least one piece of text content corresponding to the code in the second packet. The text resource set shown in Table 1 is used as an example. If the code corresponding to the at least one piece of text content carried in the second packet is "00000001", the first electronic device may determine that the text content corresponding to the second packet is "request for help".

In another optional implementation, the server may generate the third packet after decoding the second packet, and send the third packet to the first electronic device. In this case, the first electronic device may obtain the at least one piece of text content from the third packet.

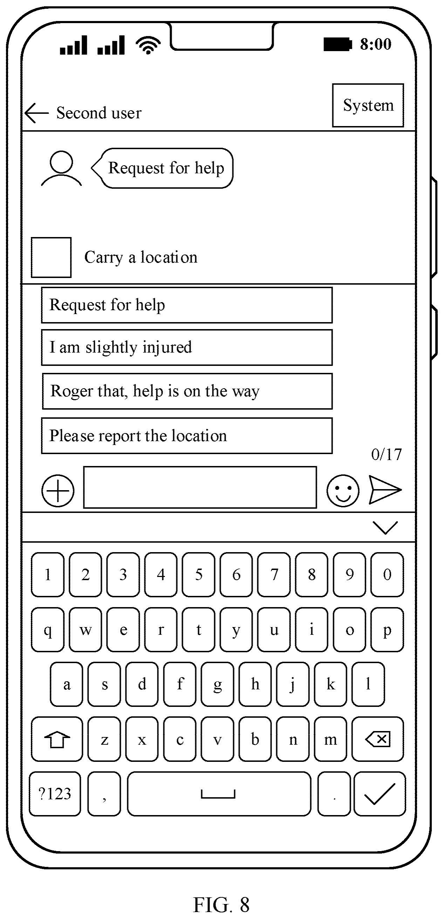

The first electronic device may display, on a display, the at least one piece of text content corresponding to the second packet. For example, FIG. 8 is a diagram of an information interface according to an embodiment of this application. Refer to FIG. 8. The first electronic device may display received text content "request for help" in the information interface of the second user.

In this embodiment of this application, it can be learned from S414c that the server may generate the third packet based on the second packet, and send the third packet to the first electronic device. After the first electronic device displays the at least one piece of text content corresponding to the second packet, the first electronic device may display text content in a text resource set indicated by the third packet. For example, when the third packet includes the set identifier of the first text resource set, the first electronic device may display the plurality of pieces of text content in the first text resource set, and the first electronic device may generate, based on a user operation and the first text resource set, a packet for replying to the second electronic device. In this scenario, the first electronic device and the second electronic device perform satellite communication based on a same text resource set. For another example, when the third packet includes the set identifier of the second text resource set, the first electronic device may display a plurality of pieces of text content in the second text resource set, and the first electronic device may generate, based on a user operation and the second text resource set, a packet for replying to the second electronic device. In this scenario, the first electronic device and the second electronic device perform satellite communication based on different text resource sets. It may be understood that, in the second scenario, the second electronic device supports the first text resource set and the second text resource set, and the first electronic device may obtain the first text resource set or the second text resource set.

In addition, in S414c, the server may further add the set identifier of the second text resource set to the second packet. In this case, after receiving the second packet, the first electronic device may simultaneously display the plurality of pieces of text content in the first text resource set and the plurality of pieces of text content in the second text resource set, or display a plurality of pieces of text content in any one of the first text resource set and the second text resource set. This is not limited in embodiments of this application.

According to the communication method provided in this embodiment of this application, a text resource set may be synchronized between the electronic devices. In this way, when performing communication through the satellite, the electronic device may generate a packet based on the text resource set. This occupies fewer satellite communication resources to transmit more text content, thereby improving communication efficiency. In addition, the text resource set in this embodiment of this application may be customized by the user, and the user may set common phrases for different service scenarios, to simplify an operation step of sending a satellite message by the user, and improve user experience.

The following further describes the communication method provided in embodiments of this application by using several specific examples. In the following example, the first electronic device is an electronic device that can be connected to the general-purpose network, and the second electronic device is an electronic device that cannot be connected to the general-purpose network temporarily. The following example 1 and example 2 may be based on the foregoing implementation A, and the following example 3 may be based on the foregoing implementation B.

Example 1: The first electronic device actively sends a satellite packet to the second electronic device.

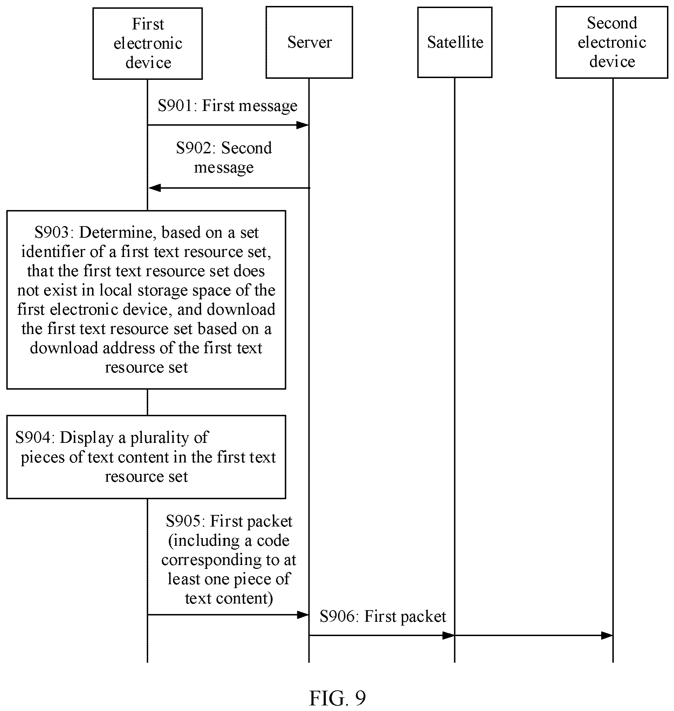

FIG. 9 is a flowchart of a communication method according to an embodiment of this application. Refer to FIG. 9. The communication method in this example includes the following steps.

S901: A first electronic device sends a first message to a server.

Optionally, the first message is used to query a text resource set supported by a second electronic device.

S902: The server sends a second message to the first electronic device.

Optionally, the second message includes a set identifier of a first text resource set, and the first text resource set is a text resource set supported by the second electronic device. Further, the second message may further include a download address of the first text resource set.

S903: The first electronic device determines, based on the set identifier of the first text resource set, that the first text resource set does not exist in local storage space of the first electronic device, and downloads the first text resource set based on the download address of the first text resource set.

The first text resource set includes a plurality of pieces of text content and a code corresponding to each piece of text content.

S904: The first electronic device displays the plurality of pieces of text content in the first text resource set.

S905: The first electronic device sends a first packet to the server in response to a first operation of a first user, where the first packet includes a code corresponding to at least one piece of text content corresponding to the first operation.

S906: The server sends the first packet to the second electronic device through a satellite.

Example 2: After the second electronic device actively sends a satellite packet to the first electronic device, the first electronic device returns a satellite packet to the server.

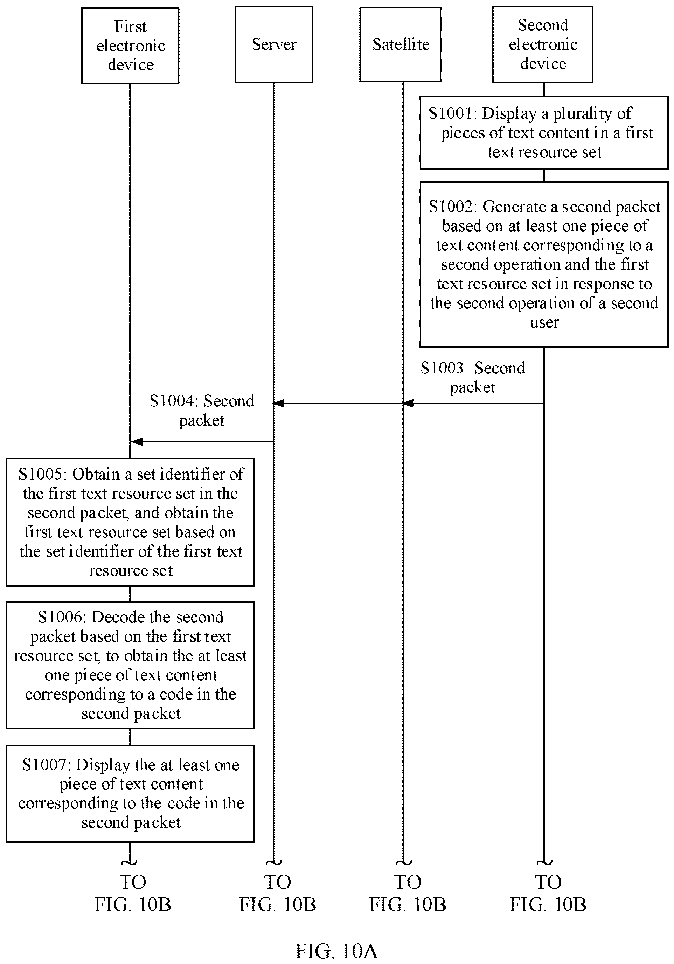

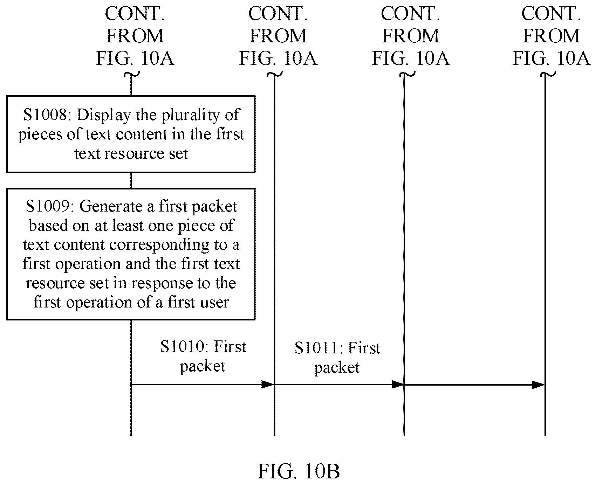

FIG. 10A and FIG. 10B are a flowchart of a communication method according to an embodiment of this application. Refer to FIG. 10A and FIG. 10B. The communication method in this example includes the following steps.

S1001: A second electronic device displays a plurality of pieces of text content in a first text resource set.

The first text resource set is a text resource set supported by the second electronic device, and the first text resource set includes the plurality of pieces of text content and a code corresponding to each piece of text content.

S1002: The second electronic device generates a second packet based on at least one piece of text content corresponding to a second operation and the first text resource set in response to the second operation of a second user.

The second packet includes a code corresponding to the at least one piece of text content corresponding to the second operation and a set identifier of the first text resource set.

S1003: The second electronic device sends the second packet to a server through a satellite.

S1004: The server determines that a first electronic device has a decoding function, and the server forwards the second packet to the first electronic device.

S1005: The first electronic device obtains the set identifier of the first text resource set in the second packet, and obtains the first text resource set based on the set identifier of the first text resource set.

S1006: The first electronic device decodes the second packet based on the first text resource set, to obtain the at least one piece of text content corresponding to the code in the second packet.

S1007: The first electronic device displays the at least one piece of text content corresponding to the code in the second packet.

S1008: The first electronic device displays the plurality of pieces of text content in the first text resource set.

S1009: The first electronic device generates a first packet based on at least one piece of text content corresponding to a first operation and the first text resource set in response to the first operation of a first user.

S1010: The first electronic device sends the first packet to the server.

S1011: The server sends the first packet to the second electronic device through the satellite.

Example 3: The second electronic device supports the first text resource set and the second text resource set.

In this example, the second electronic device supports the first text resource set and the second text resource set. The first text resource set may be a quick help text resource set, and the second text resource set may be a quick reply text resource set. The quick help text resource set and the quick reply text resource set are separately described in the following content. Details are not described temporarily in this case.

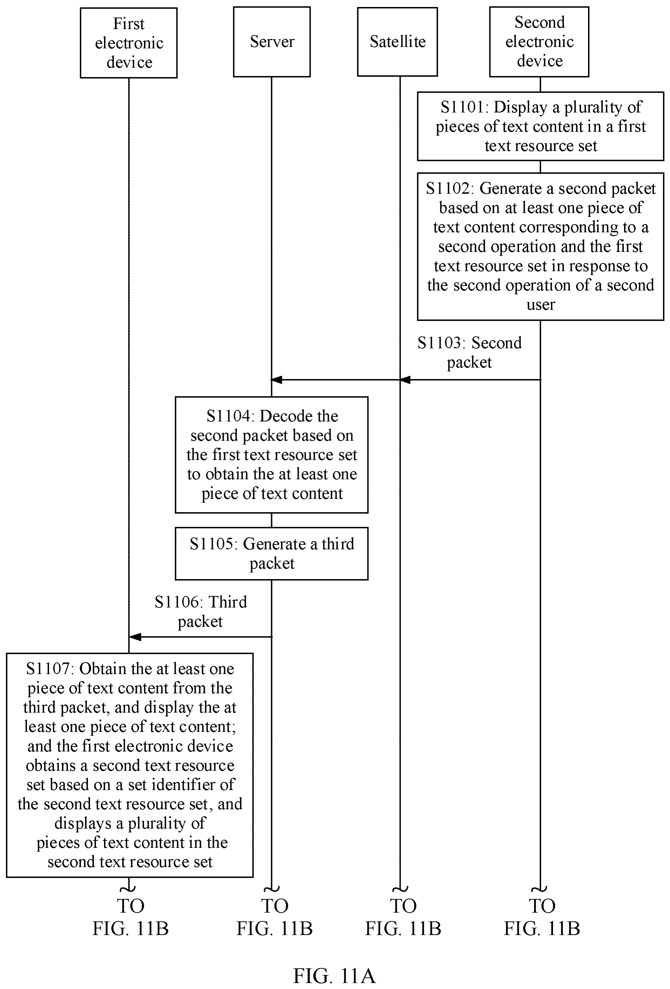

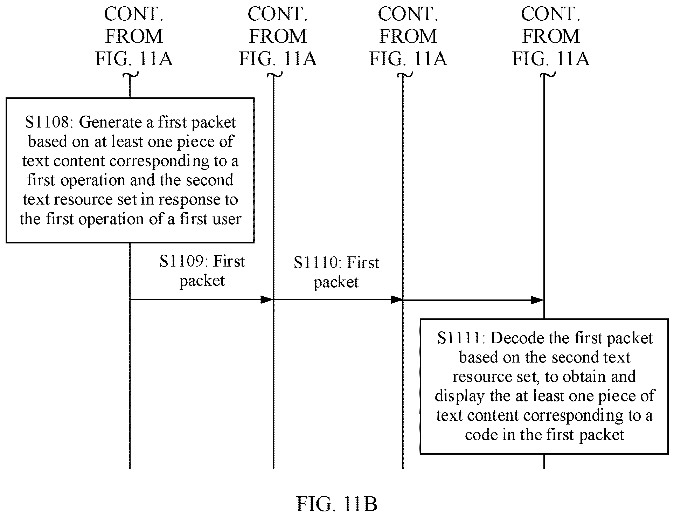

FIG. 11A and FIG. 11B are a flowchart of a communication method according to an embodiment of this application. Refer to FIG. 11A and FIG. 11B. The communication method in this example includes the following steps.

S1101: A second electronic device displays a plurality of pieces of text content in a first text resource set.

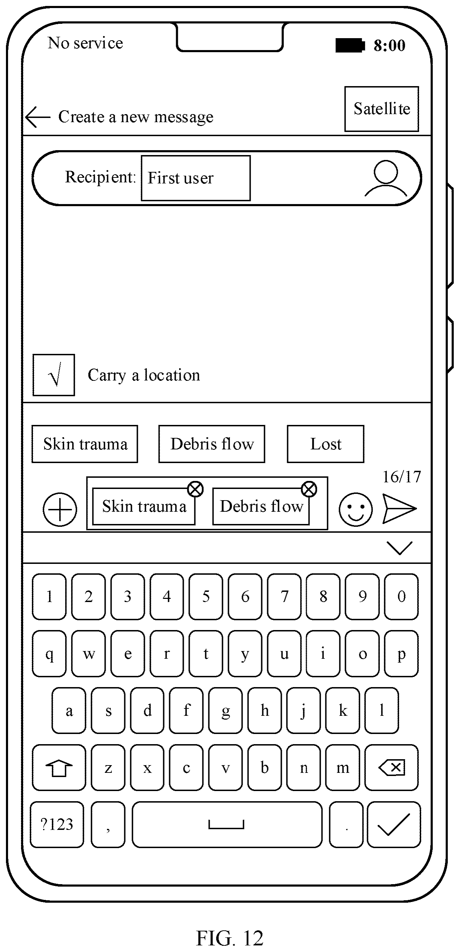

Optionally, the first text resource set is a quick help text resource set. For example, FIG. 12 is a diagram of an information editing interface of the second electronic device according to an embodiment of this application. Refer to FIG. 12. The second electronic device displays a plurality of quick help phrases in the information editing interface, for example, "skin trauma", "debris flow", and "lost".

S1102: The second electronic device generates a second packet based on at least one piece of text content corresponding to a second operation and the first text resource set in response to the second operation of a second user.

For example, the second operation is a sending operation triggered by the second user. For example, the second user selects "skin trauma" and "debris flow" in the information editing interface shown in FIG. 12, and triggers a sending operation.

The second packet includes a code corresponding to the at least one piece of text content corresponding to the second operation and a set identifier of the first text resource set.

S1103: The second electronic device sends the second packet to a server through a satellite.

S1104: The server decodes the second packet based on the first text resource set to obtain the at least one piece of text content.

S1105: The server generates a third packet.

The third packet includes the at least one piece of text content.

In an optional implementation, when determining that the second packet is a satellite packet and the second electronic device has a function of receiving the satellite packet, the server adds a set identifier of a second text resource set to the third packet. The second text resource set is a quick reply resource set.

S1106: The server sends the third packet to a first electronic device.

S1107: The first electronic device obtains the at least one piece of text content from the third packet, and displays the at least one piece of text content. The first electronic device obtains the second text resource set based on the set identifier of the second text resource set, and displays a plurality of pieces of text content in the second text resource set.

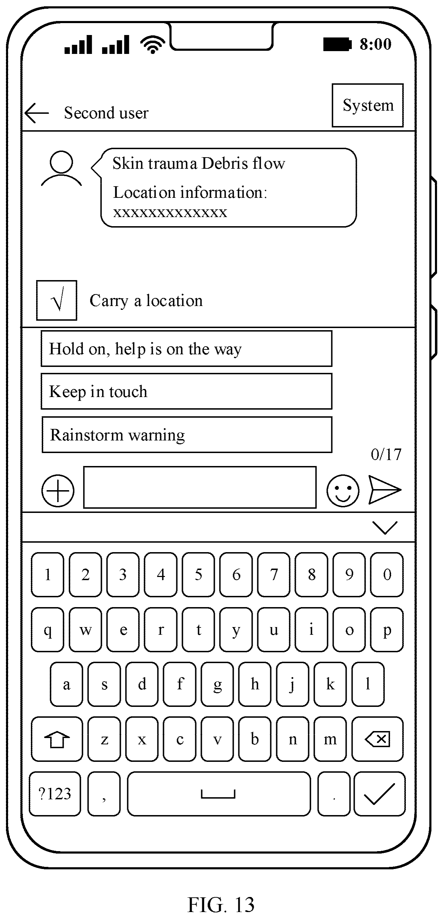

For example, FIG. 13 shows an information interface of the first electronic device according to an embodiment of this application. Refer to FIG. 13. The first electronic device may display the at least one piece of text content in the information interface of the second user, and text content sent by the second user is "skin trauma" and "debris flow". The first electronic device further displays a plurality of quick reply phrases in a quick reply resource set in the information interface. For example, quick reply phrases shown in FIG. 13 may include "hold on, help is on the way", "keep in touch", and "rainstorm warning".

S1108: The first electronic device generates a first packet based on at least one piece of text content corresponding to a first operation and the second text resource set in response to the first operation of a first user.

For example, the first operation is an operation that the first user selects "hold on, help is on the way" and sends "hold on, help is on the way".

The first packet includes a code corresponding to the at least one piece of text content corresponding to the first operation and the set identifier of the second text resource set.

S1109: The first electronic device sends the first packet to the server.

S1110: The server sends the first packet to the second electronic device through the satellite.

S1111: The second electronic device decodes the first packet based on the second text resource set, to obtain and display the at least one piece of text content corresponding to the code in the first packet.

It should be noted that, in specific implementation, for the communication methods shown in FIG. 9 to FIG. 11B in this application, refer to the foregoing embodiments of this application. Repeated parts are not described again.

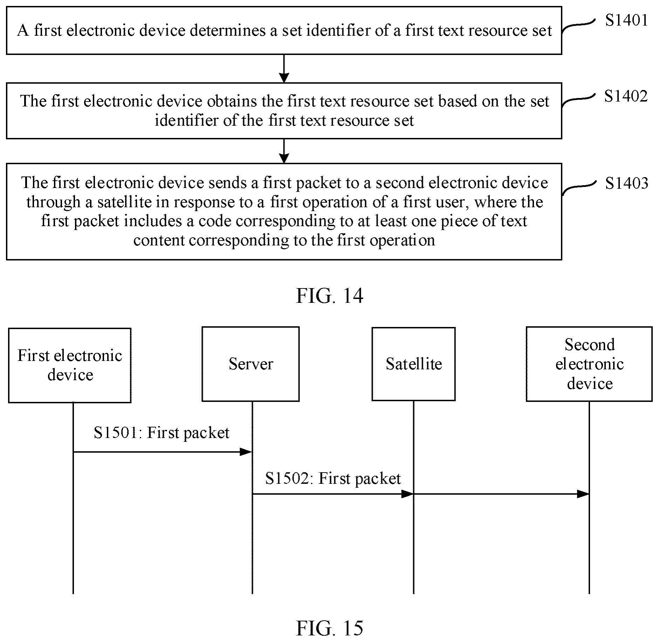

Based on a same concept, an embodiment of this application further provides a communication method. The method may be performed by a first electronic device, and the first electronic device may have the structure shown in FIG. 2 and/or FIG. 3. FIG. 14 is a flowchart of a communication method according to an embodiment of this application. Refer to FIG. 14. The method includes the following steps.

S1401: A first electronic device determines a set identifier of a first text resource set.

The first text resource set is a text resource set supported by a second electronic device, and the first text resource set includes a plurality of pieces of text content and a code corresponding to each piece of text content.

S1402: The first electronic device obtains the first text resource set based on the set identifier of the first text resource set.

S1403: The first electronic device sends a first packet to the second electronic device through a satellite in response to a first operation of a first user, where the first packet includes a code corresponding to at least one piece of text content corresponding to the first operation.

It should be noted that, in specific implementation, for the communication method shown in FIG. 14 in this application, refer to the foregoing embodiments of this application. Repeated parts are not described again.

Based on a same concept, an embodiment of this application further provides a communication method. FIG. 15 is a flowchart of a communication method according to an embodiment of this application. The method may be performed by the electronic device, the server, and the satellite in the communication system shown in FIG. 1. Refer to FIG. 15. The method includes the following steps.

S1501: A first electronic device sends a first packet to a server.

S1502: The server sends the first packet to a second electronic device through a satellite.

According to this design, after the electronic device sends a packet to the server, the server sends the packet to the satellite. In this case, according to the communication method provided in this embodiment of this application, an electronic device on which no satellite communication module is installed is supported in sending a satellite message. This expands an application scope of satellite communication and enhances a communication capability of the electronic device.

Based on the foregoing embodiments, this application further provides an electronic device. The electronic device includes a plurality of functional modules, the plurality of functional modules interact with each other to implement functions performed by the first electronic device or the second electronic device in the methods described in embodiments of this application. For example, the steps performed by the first electronic device or the second electronic device in the embodiments shown in FIG. 4A and FIG. 4B and FIG. 9 to FIG. 11B are performed. The plurality of functional modules may be implemented based on software, hardware, or a combination of software and hardware, and the plurality of functional modules may be randomly combined or divided based on specific implementation.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, the steps performed by the first electronic device or the second electronic device in the embodiments shown in FIG. 4A and FIG. 4B and FIG. 9 to FIG. 11B are performed.

Based on the foregoing embodiments, this application further provides a server. The server includes a plurality of functional modules, the plurality of functional modules interact with each other to implement functions performed by the server in the methods described in embodiments of this application. For example, the steps performed by the server in the embodiments shown in FIG. 4A and FIG. 4B and FIG. 9 to FIG. 11B are performed. The plurality of functional modules may be implemented based on software, hardware, or a combination of software and hardware, and the plurality of functional modules may be randomly combined or divided based on specific implementation.

Based on the foregoing embodiments, this application further provides a server. The server includes at least one processor and at least one memory. The at least one memory stores computer program instructions. When the server runs, the at least one processor performs functions performed by the server in the methods described in embodiments of this application. For example, the steps performed by the server in the embodiments shown in FIG. 4A and FIG. 4B and FIG. 9 to FIG. 11B are performed.

Based on the foregoing embodiments, this application further provides a computer program product including instructions. When the computer program product is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes instructions apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method, applied to a first electronic device, wherein the method comprises:
determining a set identifier of a first text resource set, wherein the first text resource set is a text resource set supported by a second electronic device, and the first text resource set comprises a plurality of pieces of text content and a code corresponding to each piece of text content;
obtaining the first text resource set based on the set identifier of the first text resource set; and
sending a first packet to the second electronic device through a satellite in response to a first operation of a first user, wherein the first packet comprises a code corresponding to at least one piece of text content corresponding to the first operation.

2. The method according to claim 1, wherein after obtaining the first text resource set based on the set identifier of the first text resource set, the method further comprises:
displaying the plurality of pieces of text content in the first text resource set, wherein the at least one piece of text content is text content selected from the plurality of pieces of text content.

3. The method according to claim 1 or 2, wherein determining the set identifier of the first text resource set comprises:
sending a first message to a server, wherein the first message is used to query a set identifier of a text resource set supported by the second electronic device; and
receiving a second message sent by the server, wherein the second message comprises the set identifier of the first text resource set.

4. The method according to claim 1 or 2, wherein determining the identifier of the first text resource set comprises:
obtaining the identifier of the first text resource set from a second packet, wherein the second packet is a packet that is received in a preset time period before a current time and whose sender is a user of the second electronic device.

5. The method according to any one of claims 1 to 4, wherein obtaining the first text resource set based on the set identifier of the first text resource set comprises:
searching local storage space for the first text resource set based on the set identifier of the first text resource set; and
when the first text resource set exists in the local storage space, obtaining the first text resource set from the local storage space; or
when the first text resource set does not exist in the local storage space, requesting to download the first text resource set from the server, receiving a download address of the first text resource set sent by the server, and downloading the first text resource set based on the download address of the first text resource set.

6. The method according to any one of claims 1 to 5, wherein sending the first packet to the second electronic device through the satellite comprises:
sending the first packet to the server, so that the server forwards the first packet to the second electronic device through the satellite; or
sending the first packet to the satellite, so that the satellite sends the first packet to the second electronic device.

7. The method according to any one of claims 1 to 6, wherein the method further comprises:
receiving a third packet sent by the server, wherein the third packet comprises at least one piece of text content and the set identifier of the first text resource set, and the at least one piece of text content is obtained by the server by decoding a packet sent by the second electronic device through the satellite; and
displaying the at least one piece of text content.

8. The method according to any one of claims 1 to 6, wherein the method further comprises:
receiving a fourth packet sent by the second electronic device through the satellite, wherein the fourth packet comprises a code corresponding to at least one piece of text content and the identifier of the first text resource set;
decoding the fourth packet based on the first text resource set to obtain the at least one piece of text content; and
displaying the at least one piece of text content.

9. The method according to any one of claims 1 to 8, wherein the method further comprises:
performing the following steps based on a specified period:
sending a third message to the server, wherein the third message is used to query whether an updated text resource set exists;
receiving a fourth message sent by the server, wherein the fourth message comprises a set identifier of the updated text resource set and a download address of the updated text resource set;
determining, based on the set identifier of the updated text resource set, that the updated text resource set is not stored in the first electronic device, and downloading the updated text resource set based on the download address of the updated text resource set; and
sending a fifth message to the server, wherein the fifth message comprises a set identifier of a text resource set supported by the first electronic device.

10. The method according to any one of claims 1 to 9, wherein the set identifier of the first text resource set is a version number of the first text resource set.

11. The method according to any one of claims 1 to 10, wherein the first text resource set is preconfigured by a system, or the first text resource set is generated by the server based on text content customized by a user.

12. A communication method, wherein the method is applied to a second electronic device, and the method comprises:
generating a second packet based on at least one piece of text content corresponding to a second operation and a first text resource set in response to the second operation of a second user, wherein the first text resource set comprises a plurality of pieces of text content and a code corresponding to each piece of text content; and
sending the second packet to a first electronic device through a satellite, wherein the second packet comprises a code corresponding to the at least one piece of text content and a set identifier of the first text resource set.

13. The method according to claim 12, wherein the method further comprises:
receiving a first packet sent by the first electronic device through the satellite;
decoding the first packet based on the first text resource set to obtain at least one piece of text content corresponding to the first packet; and
performing display based on the at least one piece of text content corresponding to the first packet.

14. The method according to claim 12 or 13, wherein the method further comprises:
performing the following steps based on a specified period:
sending a sixth message to a server, wherein the sixth message is used to query whether an updated text resource set exists;
receiving a seventh message sent by the server, wherein the seventh message comprises a set identifier of the updated text resource set and a download address of the updated text resource set;
determining, based on the set identifier of the updated text resource set, that the updated text resource set is not stored in the second electronic device, and downloading the updated text resource set based on the download address of the updated text resource set; and
sending an eighth message to the server, wherein the eighth message comprises a set identifier of a text resource set supported by the second electronic device.

15. The method according to any one of claims 12 to 14, wherein the set identifier of the first text resource set is a version number of the first text resource set.

16. The method according to any one of claims 12 to 15, wherein the first text resource set is preconfigured by a system, or the first text resource set is generated by the server based on text content customized by a user.

17. A communication method, wherein the method is applied to a server, and the method comprises:
receiving, through a satellite, a second packet sent by the second electronic device, wherein the second packet comprises a code corresponding to at least one piece of text content and a set identifier of a first text resource set, and the first text resource set comprises a plurality of pieces of text content and a code corresponding to each piece of text content;
obtaining the first text resource set based on the set identifier of the first text resource set, and decoding the second packet based on the first text resource set, to obtain the at least one piece of text content;
generating a third packet, wherein the third packet comprises the at least one piece of text content, the third packet further comprises the set identifier of the first text resource set or a set identifier of a second text resource set, and the second text resource set is a text resource set supported by the second electronic device; and
sending the third packet to the first electronic device.

18. The method according to claim 17, wherein when it is determined that the first electronic device does not have a decoding function, steps of obtaining the first text resource set based on the set identifier of the first text resource set, and decoding the second packet based on the first text resource set are performed.

19. The method according to claim 18, wherein the method further comprises:
when it is determined that the first electronic device has the decoding function, forwarding the second packet to the first electronic device.

20. The method according to any one of claims 17 to 19, wherein the method further comprises:
adding the set identifier of the second text resource set to the third packet when it is determined that the second packet is a satellite packet.

21. The method according to claim 20, wherein adding the set identifier of the second text resource set to the third packet when it is determined that the second packet is the satellite packet comprises:
adding the set identifier of the second text resource set to the third packet when it is determined that the second packet is the satellite packet and the second electronic device has a function of receiving the satellite packet.

22. The method according to any one of claims 17 to 21, wherein the set identifier of the first text resource set is a version number of the first text resource set.

23. The method according to any one of claims 17 to 22, wherein the first text resource set is a quick help text resource set, and the second text resource set is a quick reply text resource set.

24. An electronic device, comprising at least one processor, wherein the at least one processor is coupled to at least one memory, and the at least one processor is configured to read a computer program stored in the at least one memory, to perform the method according to any one of claims 1 to 11 or perform the method according to any one of claims 12 to 16.

25. An electronic device, comprising a plurality of functional modules, wherein the plurality of functional modules interact with each other to implement the method according to any one of claims 1 to 11 or perform the method according to any one of claims 12 to 16.

26. A server, comprising at least one processor, wherein the at least one processor is coupled to at least one memory, and the at least one processor is configured to read a computer program stored in the at least one memory, to perform the method according to any one of claims 17 to 23.

27. A server, comprising a plurality of functional modules, wherein the plurality of functional modules interact with each other to implement the method according to any one of claims 17 to 23.

28. A computer program product comprising instructions, wherein when the computer program product runs on a computer, the computer is enabled to perform the method according to any one of claims 1 to 11, or perform the method according to any one of claims 12 to 16, or perform the method according to any one of claims 17 to 23.

29. A computer-readable storage medium, wherein the computer-readable storage medium stores instructions, and when the instructions are run on a computer, the computer is enabled to perform the method according to any one of claims 1 to 11, or perform the method according to any one of claims 12 to 16, or perform the method according to any one of claims 17 to 23.
